(19) Europäisches Patentamt

European Patent Office

Office européen des brevets

(11) **EP 3 574 194 B1**

(12) **FASCICULE DE BREVET EUROPEEN**

(45) Date de publication et mention de la délivrance du brevet:
**09.12.2020 Bulletin 2020/50**

(21) Numéro de dépôt: **18701487.3**

(22) Date de dépôt: **26.01.2018**

(51) Int Cl.:
*F01N 3/20* *(2006.01)*          *F01N 11/00* *(2006.01)*
*F02D 29/02* *(2006.01)*          *F02D 41/00* *(2006.01)*
*F02D 41/02* *(2006.01)*          *F02D 41/14* *(2006.01)*

(86) Numéro de dépôt international:
**PCT/EP2018/051929**

(87) Numéro de publication internationale:
**WO 2018/138245 (02.08.2018 Gazette 2018/31)**

(54) **PROCEDE DE CONTROLE DES EMISSIONS D'OXYDES D'AZOTE A L'ECHAPPEMENT D'UN MOTEUR A COMBUSTION INTERNE**

VERFAHREN ZUR KONTROLLE DER EMISSION VON STICKOXIDEN EINER BRENNKRAFTMASCHINE

METHOD FOR CONTROLLING THE NITROGEN OXIDES EMISSIONS OF AN INTERNAL COMBUSTION ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.01.2017 FR 1750719**

(43) Date de publication de la demande:
**04.12.2019 Bulletin 2019/49**

(73) Titulaires:
• **Renault S.A.S.**
**92100 Boulogne-Billancourt (FR)**
• **Nissan Motor Co., Ltd.**
**Kanagawa (JP)**

(72) Inventeurs:
• **VON WISSEL, Dirk**
**92100 Boulogne-Billancourt (FR)**
• **ABIDA, Jamil**
**91850 Bouray Sur Juine (FR)**

(74) Mandataire: **Rougemont, Bernard**
**Renault s.a.s**
**TCR GRA 2 36 - Sce 00267**
**1, Avenue du Golf**
**78084 Guyancourt Cedex (FR)**

(56) Documents cités:
**EP-A2- 1 134 375     DE-C1- 4 319 282**
**FR-A1- 3 014 493**

**Description**

DOMAINE TECHNIQUE DE L'INVENTION

L'invention concerne un procédé de contrôle des émissions d'oxydes d'azote provenant des gaz de combustion d'un moteur à combustion interne, notamment un moteur de type diesel.

ETAT DE LA TECHNIQUE

Dans le document DE 43 19 282 C1, on décrit un procédé du genre précité dans le préambule de la revendication 1.

La réduction des émissions polluantes à l'échappement des moteurs à combustion interne, et plus particulièrement ceux des véhicules automobiles, qui sont soumis à des contraintes légales de plus en plus contraignantes, est un enjeu stratégique.

Pour ce faire, on a généralement recours à des systèmes de post-traitement des gaz de combustion des moteurs à combustion interne pour traiter les différents types de polluants (par exemple : monoxyde de carbone CO, hydrocarbures imbrûlés HC, oxydes d'azote $NO_x$, suies...) émis dans ces gaz.

Pour limiter plus particulièrement les rejets dans l'atmosphère des molécules d'oxydes d'azote (essentiellement : monoxyde d'azote NO et dioxyde d'azote $NO_2$), qui sont nocives à la santé et à l'environnement, de nombreux moteurs sont équipés d'un piège à oxyde d'azote et/ou d'un catalyseur de réduction sélective des oxydes d'azote, de manière à réduire en molécules inoffensives (azote $N_2$ et eau $H_2O$) les oxydes d'azote entrants.

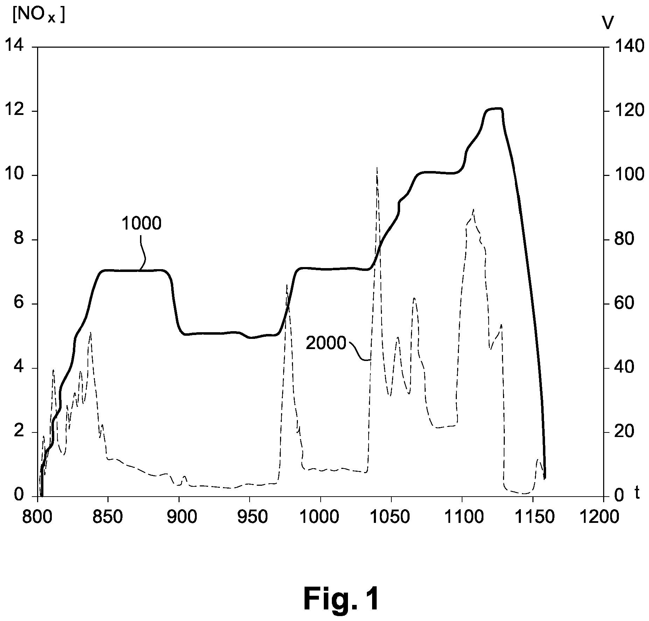

La figure 1 annexée illustre l'intérêt de tels systèmes de post-traitement. Sur cette figure, on a représenté en abscisse le temps t, et en ordonnée, d'une part (cf. échelle de gauche) la concentration molaire en oxydes d'azote, et d'autre part (cf. échelle de droite) la vitesse V d'un véhicule automobile équipé d'un moteur à combustion interne, par exemple un moteur diesel.

La courbe 1000 représente typiquement le profil de vitesse d'un véhicule sur une partie du cycle européen normalisé dit NEDC. La courbe 2000 représente l'évolution instantanée de la concentration en oxydes d'azote $[NO_x]_{tp}$ à la sortie du pot d'échappement du véhicule, c'est-à-dire en aval des systèmes de post-traitement des oxydes d'azote (piège à oxydes d'azote et/ou catalyseur SCR).

La masse totale d'oxydes d'azote produite par le moteur sur le cycle NEDC résulte du profil de concentration en oxydes d'azote $[NO_x]_{tp}$ sur la durée du cycle dont une partie est illustrée par la figure 1. Plus précisément, il s'agit de l'intégrale temporelle, sur toute la durée du cycle, du débit des gaz d'échappement multiplié par la concentration en oxydes d'azote présente dans ces gaz à la sortie du ou des systèmes de post-traitement. La législation réglemente la valeur moyennée par kilomètre parcouru sur le cycle NEDC de cette masse. Par exemple, la norme dite « euro6b » limite cette quantité moyenne de $NO_x$ à 80 g/km, le cycle complet correspondant à 11 kilomètres parcourus.

En l'absence de système de post-traitement, la concentration en oxydes d'azote à la sortie du pot d'échappement $[NO_x]_{tp}$ serait égale à la concentration en oxydes d'azote à la sortie du moteur $[NO_x]_{eo}$ et la masse totale d'oxydes d'azote émise sur le cycle serait largement supérieure à ce que la norme autorise, compte tenu des limites technologiques de la combustion des moteurs.

Avec la présence d'au moins un système de post-traitement qui présente une efficacité de traitement $\varepsilon$ élevée, c'est-à-dire un taux de réduction des oxydes d'azote élevé, par exemple une efficacité qui peut atteindre une valeur de 90% dans des conditions optimales de fonctionnement, la norme peut être respectée, parce-que la concentration en oxydes d'azote à la sortie du pot d'échappement du véhicule $[NO_x]_{tp}$ ne correspond qu'à une fraction non-traitée relativement faible de la concentration émise par le moteur $[NO_x]_{eo}$ , selon l'équation 1 suivante :

$$(Equ.1) \qquad [NO_x]_{tp} = (1-\varepsilon) \times [NO_x]_{eo}$$

Il appartient alors à chaque constructeur de régler, d'une part, les émissions de $NO_x$ dans les gaz de combustion du moteur et, d'autre part, l'efficacité de traitement des systèmes de post-traitement desdits gaz sur les différents points de fonctionnement du moteur constituant le cycle NEDC pour que, de manière globale, cette quantité moyenne maximale d'oxydes d'azote à la sortie du pot d'échappement soit respectée.

De manière générale, il est connu de régler les émissions de $NO_x$ du moteur à une valeur de concentration $[NO_x]_{eo}$ en fonction d'un ensemble de paramètres représentatifs du point de fonctionnement du moteur comprenant au moins le régime N, la charge C et une valeur représentative de la température de fonctionnement du moteur, par exemple la température d'eau $T_{eau}$. Un tel réglage, réalisé lors d'une phase de calibration au banc moteur puis embarqué dans un calculateur du véhicule, comprend :

- le réglage des paramètres de la chaîne d'air du moteur : masse d'air $M_{air}$ et de gaz brûlés $M_{gbr}$ nécessaire dans la chambre de combustion ; et
- le réglage des paramètres de la chaîne de carburant : masse de carburant $M_f$ et angle de vilebrequin 0f auquel le carburant est injecté (en une ou plusieurs fois).

Il est notamment connu qu'une augmentation d'une proportion de gaz d'échappement (à basse et/ou à haute pression) recyclés à l'admission favorise la diminution des oxydes d'azote émis dans les gaz de combustion du moteur.

Il est aussi connu de pouvoir ajuster, en fonction du point de fonctionnement du moteur et des émissions d'oxydes d'azote $[NO_x]_{eo}$ qui lui correspondent, l'efficacité de traitement ε des systèmes de post-traitement.

Par exemple, pour un piège à oxydes d'azote, on peut adapter la fréquence et/ou la durée des purges de manière à limiter la masse d'oxydes d'azote stockée dans le piège, l'efficacité étant une fonction de ladite masse stockée. Lorsque le piège est relativement froid, on peut aussi le chauffer à une température où son efficacité est plus élevée.

Par exemple aussi, pour un catalyseur de réduction sélective des oxydes d'azote, on peut adapter le débit d'agent réducteur (Adblue®) injecté dans le catalyseur de manière que la masse d'ammoniac qui y est stockée soit régulée en permanence sur une valeur de masse donnée qui détermine son efficacité. Il est connu que l'efficacité est maximale lorsque la masse stockée est proche de la capacité maximale de stockage en ammoniac (ASC) du catalyseur.

Cependant, chaque point de fonctionnement du moteur compris dans le cycle NEDC fait généralement l'objet d'un réglage unique, dit réglage nominal, qui est reproduit sur le véhicule à chaque fois que les mêmes paramètres représentatifs du point de fonctionnement du moteur (charge, régime, température d'eau...) sont présents, et les différents points de fonctionnement du moteur ne donnent pas lieu à des émissions de quantités identiques d'oxydes d'azote, comme le montrent les fortes variations de la courbe 2000 de la figure 1. D'autre part, en dehors de ce cycle normalisé, les autres points de fonctionnement du moteur, qui peuvent être régulièrement rencontrés lors d'un usage courant du véhicule (par exemple en cycle urbain, sur route ou sur autoroute), font aussi généralement l'objet d'un réglage nominal unique, émetteur d'une plus ou moins grande quantité d'oxydes d'azote et non pas d'une quantité d'oxydes d'azote moyenne constante.

Grâce à une bonne expérience statistique des cycles de roulage réels des véhicules et de la modélisation de l'occurrence des points de fonctionnement du moteur qui sont associés à ces cycles réels, les constructeurs automobiles peuvent choisir des réglages nominaux des différents points de fonctionnement du moteur qui permettent, avec une probabilité calculée élevée, d'obtenir sur un tel cycle de roulage réel quelconque une quantité d'oxydes d'azote moyenne par kilomètre qui reste dans des limites prédéfinies, par exemple un multiple de la limite légale sur cycle, une telle limite étant aussi connue sous l'appellation de seuil de facteur de conformité (FC).

Néanmoins, s'agissant d'une approche statistique, on ne peut garantir que pour un cycle réel particulier, notamment pour un usage extrême (par exemple un cycle particulièrement sévère en termes de charge moteur ou de transitoires), un tel seuil ne soit absolument jamais dépassé.

RESUME DE L'INVENTION

L'invention propose de remédier aux défauts liés aux procédés de traitement des oxydes d'azote connus, plus particulièrement à l'inadéquation desdits procédés à la maîtrise des quantités émises sur un cycle de roulage quelconque.

Elle propose pour cela un procédé selon la revendication 1 qui permette de maintenir en dessous d'un seuil prédéterminé fixe, sur n'importe quel parcours assez long d'un véhicule, la quantité moyenne d'oxydes d'azote par kilomètre parcouru qui est émise par le véhicule. Par « assez long », on entend que le parcours permette au système de post-traitement d'atteindre une température de fonctionnement suffisante (par exemple : environ 170°C pour un piège à oxydes d'azote, ou environ 200°C pour un catalyseur de réduction sélective des oxydes d'azote).

Elle propose un procédé de contrôle des émissions d'oxydes d'azote à la sortie du pot d'échappement d'un véhicule automobile équipé d'un moteur à combustion interne associé à au moins un système de post-traitement des oxydes d'azote émis dans les gaz de combustion du moteur, comprenant au moins une étape de détermination de la quantité moyenne d'oxydes d'azote par kilomètre parcouru émise par le véhicule depuis le début d'un trajet jusqu'à l'arrêt du véhicule, caractérisé en ce qu'il comporte, de manière itérative à chaque pas de distance élémentaire fixe parcouru depuis le début du trajet et jusqu'à l'arrêt du véhicule :

- une étape au cours de laquelle on détermine un facteur de conformité à court terme, égal à la quantité moyenne d'oxydes d'azote par kilomètre parcouru émise sur ladite distance élémentaire qui vient d'être parcourue, et un facteur de conformité à long terme, égal à la quantité moyenne d'oxydes d'azote par kilomètre parcouru sur la distance parcourue depuis le début du trajet ;
- une étape au cours de laquelle on compare ledit facteur de conformité à long terme avec un seuil ; et,
- une étape au cours de laquelle, quand ledit facteur de conformité à long terme est supérieur audit seuil :

i. on détermine un ensemble de paramètres représentatifs du point de fonctionnement du moteur comprenant au moins le couple du moteur, le régime du moteur et la température d'eau du moteur ; et,

ii. on procède à un réglage du moteur et/ou du système de post-traitement correspondant à une concentration en oxydes d'azote à la sortie du pot d'échappement du véhicule apte à rendre le facteur de conformité à court terme déterminé au pas de distance suivant strictement inférieur audit seuil.

## BREVE DESCRIPTION DES FIGURES

D'autres caractéristiques et avantages de l'invention apparaîtront à la lecture d'un mode de réalisation non limitatif de celle-ci, en se reportant aux dessins annexés sur lesquels :

- la figure 1 représente les émissions d'oxydes d'azote d'un véhicule équipé d'un moteur à combustion interne sur une partie du cycle NEDC;
- la figure 2 représente un dispositif de motorisation apte à la mise en oeuvre du procédé selon l'invention ; et,
- la figure 3 est un organigramme qui illustre les différentes étapes du procédé selon un mode de réalisation de l'invention.

## DESCRIPTION DETAILLEE DES FIGURES

La figure 1 a déjà été décrite plus haut et ne nécessite pas de commentaires supplémentaires.

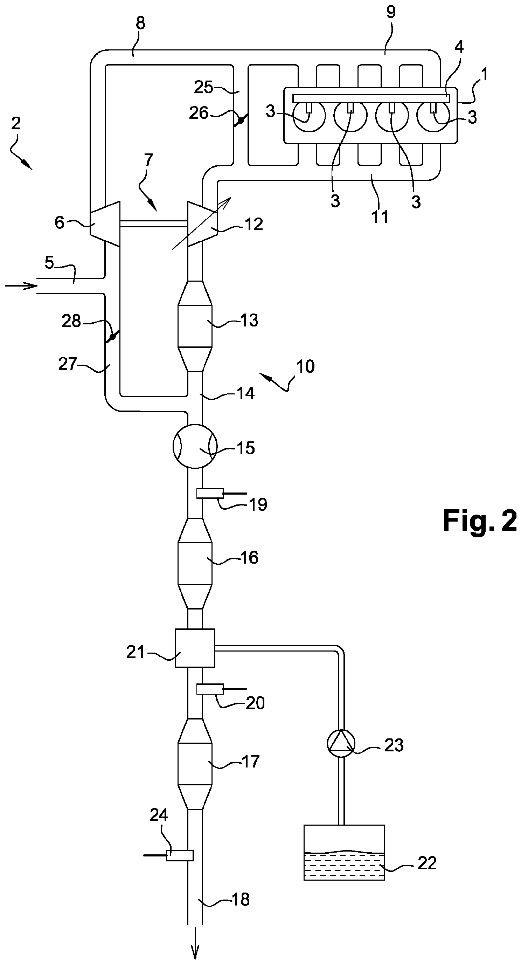

Sur la figure 2, on a représenté un dispositif de motorisation apte à la mise en oeuvre du procédé selon l'invention. Il comprend un moteur 1 à combustion interne, par exemple un moteur diesel de véhicule automobile, qui se présente ici sous la forme d'un moteur à quatre cylindres en ligne suralimenté. Le moteur 1 est alimenté en air par un circuit d'admission d'air 2, et en carburant, par exemple du gazole, par une pluralité d'injecteurs 3 montés sur une rampe commune 4 d'alimentation en carburant.

Le circuit d'admission d'air 2 comporte d'amont en aval, c'est-à-dire dans le sens de circulation de l'air, une conduite d'admission d'air 5, un compresseur 6 d'un turbocompresseur 7 du moteur 1, une conduite de liaison compresseur - collecteur d'admission 8 et un collecteur d'admission 9, ou répartiteur 9. Bien entendu, le circuit d'admission 2 peut comporter d'autres composants non représentés ici, par exemple un filtre à air, un refroidisseur d'air suralimenté, etc.

Le moteur 1 est aussi équipé d'un circuit d'échappement 10 des gaz d'échappement, ou ligne d'échappement 10, comprenant d'amont en aval, c'est-à-dire dans le sens de circulation des gaz : un collecteur d'échappement 11 ; une turbine 12 du turbocompresseur 7 ; un premier système de post-traitement 13, par exemple un catalyseur d'oxydation 13 et/ou un filtre à particules 13 ; une conduite de liaison premier système - débitmètre 14 ; un débitmètre 15, apte à mesurer une valeur de débit des gaz d'échappement $Q_{ech}$ ; un deuxième système de post-traitement 16, par exemple un piège à oxydes d'azote 16 ; un troisième système de post-traitement 17 qui se présente ici sous la forme d'un catalyseur de réduction sélective des oxydes d'azote 17 (dit aussi catalyseur SCR) ; et, un pot d'échappement 18. Bien entendu, d'autres arrangements sont possibles sans nuire à la généralité de l'invention. Par exemple, le circuit d'échappement peut ne pas comprendre de piège à oxydes d'azote 16 mais un seul catalyseur SCR 17 pour le traitement des oxydes d'azote émis par le moteur. Par exemple, le piège à oxydes d'azote 16 peut être associé à catalyseur d'oxydation 13 dans une même enveloppe métallique, ou le catalyseur SCR 17 peut être associé à un filtre à particules dans une même enveloppe métallique, etc.

Le piège à oxydes d'azote 16 peut être associé à un capteur de température 19 monté en amont de celui-ci. Le catalyseur SCR peut aussi être associé à un capteur de température 20 monté en amont de celui-ci. Ils permettent notamment d'ajuster l'efficacité de traitement par des mesures spécifiques lorsque la température est inférieure à un seuil.

Pour la réduction des oxydes d'azote émis dans les gaz de combustion du moteur 1 dans le catalyseur SCR 17, le catalyseur SCR 17 est alimenté en agent réducteur à base d'urée (Adblue®) par l'intermédiaire d'un dispositif d'injection 21, par exemple un mixeur 21 situé en amont du catalyseur SCR 17, à partir d'un réservoir 22. Une vanne de réglage 23 permet d'ajuster de manière continue le débit de réducteurs $Q_{NH3,SCR,in}$ injecté.

Pour la mise en oeuvre du procédé selon l'invention, le circuit d'échappement 10 comporte aussi des moyens de mesure 24 de la concentration en oxydes d'azote $[NO_x]_{tp}$ dans les gaz rejetés dans l'atmosphère extérieure, c'est-à-dire à la sortie du pot d'échappement 18. Il s'agit de préférence d'un capteur d'oxydes d'azote 24.

En multipliant le débit des gaz d'échappement $Q_{ech}$, par exemple déterminé grâce au débitmètre 15, avec la concentration en oxydes d'azote $[NO_x]_{tp}$ mesurée par le capteur 24, on détermine le débit d'oxydes d'azote rejeté dans l'atmosphère, pour le point de fonctionnement courant du moteur 1.

Le circuit d'échappement 10 comprend par ailleurs ici un circuit de recirculation partielle des gaz d'échappement à l'admission à haute pression, dit aussi circuit EGR HP 25 (de l'acronyme en langue anglaise pour : Exhaust Gas Recycling). Il se présente sous la forme d'une conduite 25 qui prend naissance en un point du circuit d'échappement 10 situé en amont de la turbine 12, ici entre le collecteur d'échappement 11 et la turbine 12. Son autre extrémité débouche en aval du compresseur 6, dans la conduite de liaison compresseur - collecteur d'admission 8. Il est équipé d'une vanne de recirculation partielle des gaz d'échappement à haute pression 26, dite aussi vanne EGR HP 26, dont le réglage permet d'ajuster la proportion de gaz à haute pression recyclés à l'admission.

Le circuit d'échappement 10 comprend ici aussi un circuit de recirculation partielle des gaz d'échappement à l'admission à basse pression 27, dit aussi circuit EGP BP 27. Il se présente sous la forme d'une conduite 27 qui prend naissance en un point du circuit d'échappement situé en aval de la turbine 12, ici de manière non limitative à la sortie du premier système de post-traitement 13 en un point de la conduite de liaison premier système - débitmètre 14. Son autre extrémité débouche en amont du compresseur 6, dans la conduite d'admission d'air 5. Il est équipé d'une vanne de recirculation partielle des gaz d'échappement à basse pression 28, dite aussi vanne EGR BP 28, dont le réglage permet d'ajuster la proportion de gaz à basse pression recyclés à l'admission.

Le dispositif de motorisation comprend aussi des moyens de contrôle (non représentés), par exemple un calculateur électronique, apte à régler les paramètres de fonctionnement du dispositif de motorisation, notamment du moteur 1, du piège à oxydes d'azote 16 et du catalyseur SCR 17, en fonction notamment d'une consigne de couple C correspondant à un enfoncement de la pédale d'accélérateur par le conducteur du véhicule, d'un régime du moteur N et d'une valeur de température d'eau $T_{eau}$. De manière connue en soi, le calculateur règle l'admission d'air et la proportion de gaz d'échappement à haute pression et à basse pression recyclés à l'admission, l'injection de carburant dans le moteur, et le débit de réducteurs $Q_{NH3,SCR,in}$ injecté en amont du catalyseur SCR 17. Il peut aussi adapter la fréquence et/ou la durée de la purge du piège à oxydes d'azote 16, par exemple en ajustant le seuil de masse d'oxydes d'azote qui déclenche une purge en mélange riche.

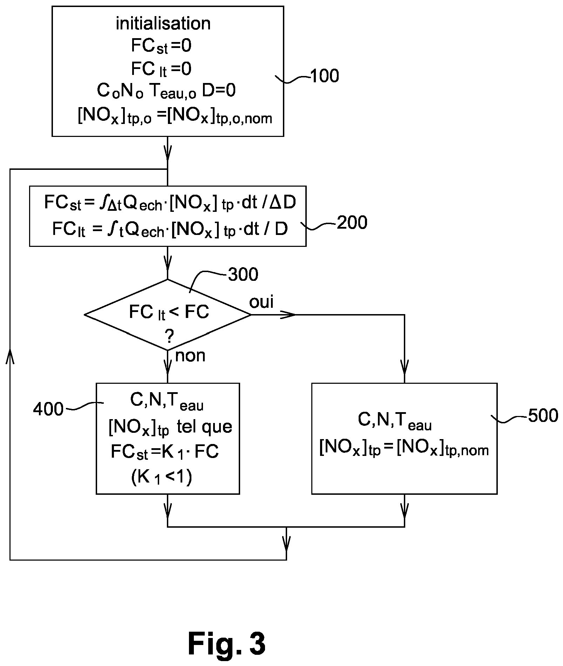

La figure 3 illustre les étapes d'un mode de réalisation non limitatif du procédé selon l'invention.

Le procédé comprend au préalable une étape de définition de deux facteurs de conformité :
On définit un facteur de conformité à court terme $FC_{st}$, qui est égal à une valeur représentative de la masse d'oxydes d'azote émise par le véhicule (c'est-à-dire : à la sortie du pot d'échappement 18) sur une distance élémentaire fixe $\Delta D$ d'un parcours du véhicule, par exemple selon l'équation 2 suivante :

$$\text{(Equ.2)} \qquad FC_{st} = ( \int_{\Delta t} Q_{ech} \times [NO_x]_{tp} \times dt ) / \Delta D$$

, équation dans laquelle :

- $Q_{ech}$ désigne le débit des gaz d'échappement, par exemple mesuré par le débitmètre 15 ;
- $[NO_x]_{tp}$ désigne la concentration en oxydes d'azote dans les gaz d'échappement à la sortie du pot d'échappement, par exemple mesurée par le capteur d'oxydes d'azote 24 ; et
- $\Delta t$ désigne la durée d'intégration, égale au temps que le véhicule met pour parcourir la distance élémentaire fixe $\Delta D$. Pour connaître ladite durée d'intégration, c'est-à-dire la durée au bout de laquelle on arrête le calcul intégral, on peut par exemple calculer en parallèle l'intégrale temporelle de la vitesse V du véhicule (mesurée par un capteur non représenté) et arrêter le calcul lorsque cette intégrale temporelle de la vitesse atteint une valeur égale à ladite distance $\Delta D$. Contrairement à la distance élémentaire $\Delta D$, cette durée $\Delta t$ n'est donc généralement pas fixe mais dépend du type de roulage.

On définit en outre un facteur de conformité à long terme $FC_{lt}$, qui est égal à une valeur représentative de la masse d'oxydes d'azote émise par le véhicule (à la sortie du pot d'échappement 18) sur la distance D parcourue par le véhicule depuis le démarrage du véhicule, par exemple selon l'équation 3 suivante :

$$\text{(Equ.3)} \qquad FC_{lt} = ( \int_t Q_{ech} \times [NO_x]_{tp} \times dt ) / D$$

, équation dans laquelle :

- Qech désigne le débit des gaz d'échappement, par exemple mesuré par le débitmètre 15 ;
- $[NO_x]_{tp}$ désigne la concentration en oxydes d'azote dans les gaz d'échappement à la sortie du pot d'échappement, par exemple mesurée par le capteur d'oxydes d'azote 24 ; et
- t désigne la durée d'intégration, égale au temps que le véhicule met pour parcourir ladite distance D. Cette distance D et cette durée t seront ici calculées de manière itérative à chaque pas de calcul du procédé en ajoutant à la précédente valeur de distance la valeur de la distance élémentaire $\Delta D$ et à la précédente durée t la durée d'intégration $\Delta t$ correspondant à la distance élémentaire $\Delta D$ du pas de calcul précédent.

On rappelle que le procédé selon l'invention a pour objectif de maintenir en dessous d'un seuil prédéterminé fixe la quantité moyenne d'oxydes d'azote par kilomètre parcouru émise par le véhicule, sur n'importe quel parcours assez long du véhicule. En d'autres termes, il vise à maintenir le facteur de conformité à long terme $FC_{lt}$ en dessous d'un seuil de facteur de conformité FC prédéterminé, quelle que soit l'évolution des paramètres représentatifs du point de fonctionnement du moteur, sur un parcours quelconque. Toutefois, en raison de la faible efficacité $\varepsilon$ des systèmes de post-traitement 16,17 à basse température, par exemple en dessous d'une température de fonctionnement de 170°C environ pour un piège à oxydes d'azote 16 ou de 200°C environ pour un catalyseur SCR 17, le procédé ne peut être envisagé que pour un parcours assez long. Par assez long, on entend que la température du système 16,17, mesurée par le capteur de température 19,20 associé, ait au moins eu le temps d'atteindre la température de fonctionnement considérée.

Le procédé débute par une étape 100 d'initialisation au cours de laquelle le moteur est démarré et le trajet du véhicule commence. Les facteurs de conformité à court terme $FC_{st}$ et à long terme $FC_{lt}$ ainsi que la distance parcourue depuis le début du trajet D ont des valeurs nulles. On détermine un ensemble de paramètres représentatifs du point de fonctionnement du moteur, par exemple une valeur de consigne de couple $C_0$ (provenant par exemple d'un enfoncement de la pédale d'accélérateur du véhicule), une valeur de régime $N_0$, et une valeur de température d'eau $T_{eau,0}$. Le moteur est réglé sur un réglage nominal (valeurs de quantité d'air $Q_{air}$ et de quantité de gaz recyclés $Q_{EGR}$, débit de carburant Qf et angle vilebrequin d'injection $\theta_f$), et le système de post-traitement 16,17 est réglé sur une valeur d'efficacité nominale. Ces réglages correspondent à une valeur de concentration en oxydes d'azote nominale $[NO_x]_{tp,nom}$. Il s'agit généralement de réglages qui ne permettent pas de minimiser les émissions d'oxydes d'azote dans l'absolu, mais d'assurer un compromis entre les émissions des différents polluants (notamment un compromis avec les émissions de particules de suies), la consommation de carburant, etc., de façon à limiter les émissions d'oxydes d'azote aux seuils de conformité légaux et à les limiter également dans toutes les conditions courantes d'utilisation du véhicule en termes de plage de température extérieure, d'altitude, de conditions de circulation en usage urbain et extra-urbain, etc.

Les étapes suivantes du procédé sont réalisées de manière itérative, à chaque pas de distance élémentaire $\Delta D$ supplémentaire parcourue par le véhicule. Le procédé s'arrête à la fin du parcours du véhicule, c'est-à-dire lorsque le conducteur arrête le moteur. On notera que si le moteur est équipé d'un système d'arrêt et de redémarrage automatique dit « stop & start », un arrêt du moteur provoqué par un tel système, c'est-à-dire un arrêt non provoqué volontairement par le conducteur, n'interrompt pas le procédé.

Le procédé se poursuit par une étape 200 de calcul du facteur de conformité à court terme $FC_{st}$ et du facteur de conformité à long terme $FC_{lt}$ comme exposé plus haut.

Le procédé se poursuit par une étape 300 de comparaison du facteur de conformité à long terme $FC_{lt}$ avec un seuil de facteur de conformité FC. Si le facteur de conformité à long terme est supérieur au seuil, le procédé oriente vers une étape 400 au cours de laquelle on détermine les valeurs suivantes des paramètres représentatifs du point de fonctionnement du moteur (consigne de couple C, régime N, température d'eau $T_{eau}$), et on règle le moteur 1 et/ou le système de post-traitement 16,17 sur une valeur différente du réglage nominal, pour ces valeurs des paramètres représentatifs du point de fonctionnement du moteur courants.

Plus précisément on ajuste le réglage et donc la concentration en oxydes d'azote $[NO_x]_{tp}$ de manière que, sur la distance élémentaire $\Delta D$ suivante, la facteur de conformité à court terme $FC_{st}$ soit strictement inférieur au seuil de facteur de conformité FC. Par exemple, de manière non limitative du mode de réalisation représenté à la figure 3, on peut faire en sorte que le facteur de conformité à court terme $FC_{st}$ représente un pourcentage $K_1$ forfaitaire fixe du seuil de facteur de conformité FC strictement inférieur à 1, par exemple 90% (c'est-à-dire 0,9).

De manière connue en soi, on peut augmenter une proportion de gaz d'échappement à basse et/ou à haute pression recyclés à l'admission. On peut aussi modifier le débit d'agent réducteur injecté dans le catalyseur SCR 17, etc.

Dans le cas contraire, c'est-à-dire si le facteur de conformité à long terme $FC_{lt}$ est inférieur au seuil de facteur de conformité FC, le procédé oriente vers l'étape 500 dans laquelle le réglage du moteur 1 et du système de post-traitement 16,17 reste le réglage nominal. En d'autres termes, on ne pilote pas la quantité d'oxydes d'azote émise en fonction du seuil de facteur de conformité FC.

Après l'étape 400 ou 500, le procédé reprend à l'étape 200, jusqu'à la fin du trajet du véhicule. On comprend de ce qui précède que, après chaque étape 400, le véhicule émet ponctuellement une quantité d'oxydes d'azote moyenne par kilomètre inférieure à la quantité moyenne maximale acceptable sur la totalité du trajet, ce qui a pour effet de diminuer la valeur suivante du facteur de conformité à long terme $FC_{lt}$ calculée au pas suivant de l'étape 200. Néanmoins, comme ce facteur de conformité à long terme prend en compte tout l'historique du trajet du véhicule depuis le début du trajet, sa valeur varie relativement lentement à chaque pas de calcul, si bien qu'il peut s'avérer nécessaire de procéder à plusieurs itérations consécutives de l'étape 400 pour que ce facteur de conformité à long terme $FC_{lt}$ passe en dessous du seuil FC. Quand tel est le cas, on comprend de l'étape 500 qu'on peut reprendre un réglage nominal moins contraignant, dans lequel le facteur de conformité à court terme $FC_{st}$ n'est plus contrôlé, ce qui peut avoir pour effet de faire remonter le facteur de conformité à long terme $FC_{lt}$ légèrement au-dessus du seuil FC si le réglage nominal du point de fonctionnement est très émissif en oxydes d'azote. Dans ce cas, le procédé reprenant à l'étape 200, on comprend qu'on obtient néanmoins dans tous les cas un pilotage du facteur de conformité à long terme $FC_{lt}$ autour du seuil FC, c'est-à-dire légèrement en dessous ou légèrement au-dessus dudit seuil.

Des variantes du procédé, non illustrées par la figure 3, sont envisageables pour garantir un pilotage du facteur de conformité à long terme $FC_{lt}$ qui soit systématiquement en dessous du seuil de facteur de conformité FC, et non pas seulement autour dudit seuil.

Dans une première variante, on peut remplacer le seuil FC de l'étape 300 par un second seuil de facteur de conformité FC' qui présente une marge suffisante par rapport au seuil FC qui est réellement souhaité comme limite supérieure, plus précisément un facteur FC' plus faible que le seuil que le seuil de conformité FC. Par exemple, la marge à prendre peut être égale à la plus grande valeur possible de facteur de conformité à court terme $FC_{st}$ calculable avec le réglage nominal de tous les points de fonctionnement du moteur.

Dans une deuxième variante, on peut aussi remplacer le réglage nominal de l'étape 500 par un réglage dans lequel la concentration en oxydes d'azote $[NO_x]_{tp}$ est telle que le facteur de conformité à court terme $FC_{st}$ soit égal au seuil de facteur de conformité FC. Il en résulte que le facteur de conformité à long terme $FC_{lt}$, après avoir diminué jusqu'au seuil ou en dessous du seuil, se stabilise ensuite sur la valeur du seuil ou sur une valeur légèrement inférieure.

Dans une troisième variante, les étapes du procédés sont réalisées sur des fenêtres glissantes de distance élémentaire fixe ΔD parcourue par le véhicule. Plus précisément, on découpe la distance élémentaire fixe ΔD en un multiple n de sous-distances élémentaires Δd successives de valeurs identiques, par exemple 4 sous-distances élémentaires Δd égales chacune à un quart de la distance élémentaire ΔD. On réalise les étapes 200 et 500 du procédé à chaque pas de sous-distance Δd parcourue et non pas à chaque pas de distance ΔD parcourue, c'est-à-dire n fois plus souvent, en calculant le facteur de conformité à court terme $FC_{st}$ de la même manière qu'indiqué précédemment, c'est-à-dire pour la distance élémentaire ΔD qui vient d'être parcourue. En d'autres termes, on calcule à l'étape 200, à chaque fois qu'une nouvelle sous-distance élémentaire Δd est parcourue, une nouvelle valeur de facteur de conformité à court terme $FC_{st}$ dans une mémoire différente du calculateur, et on adapte le réglage du moteur 1 et/ou du système de post-traitement 16,17 à l'étape 400 à chaque fois qu'une sous-distance Δd est parcourue, si le facteur de conformité à long terme $FC_{lt}$ calculé à l'étape 200 est supérieur au seuil de facteur de conformité FC.

L'avantage d'un tel mode de réalisation est un comportement nettement plus lissé de l'algorithme de calcul qui fait moins d'allers-retours entre deux réglages différents car chaque nouvelle décision de réglage (après le parcours d'une nouvelle sous-distance Δd, c'est-à-dire n fois plus souvent, par exemple 4 fois plus souvent, qu'avec le premier mode décrit à l'appui de la figure 3) est corrélée avec la précédente décision.

D'autres modes de réalisation du procédé selon l'invention peuvent être encore envisagés de manière avantageuse.

Par exemple, si le facteur de conformité $FC_{lt}$ est très supérieur au seuil FC recherché et que l'on souhaite le faire converger plus rapidement sur ledit seuil, on peut envisager que le procédé comprenne, après une étape 400 dans laquelle le facteur de conformité à court terme $FC_{st}$ est égal à un premier pourcentage $K_1$ du seuil FC suivie d'une étape 200 dans laquelle on constate que la facteur de conformité à long terme $FC_{lt}$ est encore supérieur au seuil, au moins un deuxième étape de réglage similaire à l'étape 400 dans laquelle le facteur de conformité à court terme $FC_{st}$ est égal à un deuxième pourcentage $K_2$ du seuil FC, ce deuxième pourcentage $K_2$ étant plus faible que le premier.

Par exemple le deuxième pourcentage $K_2$ peut être égal à 80% si le premier pourcentage $K_1$ est égal à 90%. On pourra alors activer des leviers de réglage différents pour obtenir les pourcentages $K_1$ et $K_2$. De préférence, à la première étape (convergence de $FC_{lt}$ sur $K_{1\,x}$ FC), on s'attachera à diminuer les émissions d'oxydes d'azote du moteur $[NO_x]_{eo}$ par rapport au réglage nominal, par exemple en augmentant le recyclage des gaz d'échappement. A la deuxième étape (convergence de $FC_{lt}$ sur $K_{2\,x}$ FC), on augmentera plutôt l'efficacité de traitement du système de dépollution 16,17, par rapport au réglage nominal, par exemple par chauffage supplémentaire, par modification de l'injection d'agent réducteur, etc., cette mesure pouvant être cumulée avec la mesure prise à la première étape. Une alternative à cette deuxième étape pourra encore consister à limiter la puissance du moteur pour éviter au moteur de fonctionner à fort régime et à forte charge, ces points de fonctionnement correspondant aux plus fortes émissions d'oxydes d'azote. En d'autres termes, malgré une requête de couple C élevée de la part du conducteur correspondant à un enfoncement important de la pédale d'accélérateur, le calculateur limitera le paramètre de couple correspondant au point de fonctionnement du moteur à une valeur maximale prédéterminée.

Dans ce dernier cas où au moins deux réglages différents du réglage nominal sont prévus, on peut encore envisager des variantes à la réalisation de l'étape 500 prévue à la figure 3. Par exemple, lorsque l'étape 300 conclut que le facteur de conformité à long terme $FC_{lt}$ est devenu inférieur au seuil FC seulement après l'application du deuxième réglage dans lequel le facteur de conformité à court terme $FC_{st}$ est égal au deuxième pourcentage $K_2$ du seuil FC, alors on peut prévoir qu'à l'étape 500, le réglage soit tel que le facteur de conformité à court terme $FC_{st}$ soit égal au premier pourcentage $K_1$ du seuil FC de manière à limiter encore davantage les émissions d'oxydes d'azote. Bien entendu, l'homme de métier pourra combiner plusieurs des variantes explicitement décrites ici ou les adapter sans sortir du cadre de la présente invention.

**Revendications**

1. Procédé de contrôle des émissions d'oxydes d'azote à la sortie du pot d'échappement (18) d'un véhicule automobile équipé d'un moteur à combustion interne (1) associé à au moins un système de post-traitement (16,17) des oxydes d'azote émis dans les gaz de combustion du moteur (1), comprenant au moins une étape de détermination de la quantité moyenne d'oxydes d'azote par kilomètre parcouru ($FC_{lt}$) émise par le véhicule depuis le début d'un trajet jusqu'à l'arrêt du véhicule,
   **CARACTERISE EN CE QU'**
   il comporte, de manière itérative à chaque pas de distance élémentaire fixe ($\Delta D$) parcouru, depuis le début du trajet et jusqu'à l'arrêt du véhicule :

   - une étape (200) au cours de laquelle on détermine un facteur de conformité à court terme ($FC_{st}$), égal à la quantité moyenne d'oxydes d'azote par kilomètre parcouru émise sur ladite distance élémentaire ($\Delta D$) qui vient d'être parcourue, et un facteur de conformité à long terme ($FC_{lt}$), égal à la quantité moyenne d'oxydes d'azote par kilomètre parcouru sur la distance (D) parcourue depuis le début du trajet ;
   - une étape (300) au cours de laquelle on compare ledit facteur de conformité à long terme ($FC_{lt}$) avec un seuil (FC,FC') ; et,
   - une étape (400) au cours de laquelle, quand ledit facteur de conformité à long terme ($FC_{lt}$) est supérieur audit seuil (FC,FC') :

     i. on détermine un ensemble de paramètres représentatifs du point de fonctionnement du moteur comprenant au moins le couple (C) du moteur, le régime (N) du moteur et la température d'eau ($T_{eau}$) du moteur ; et,
     ii. on procède à un réglage du moteur (1) et/ou du système de post-traitement (16,17) correspondant à une concentration en oxydes d'azote $[NO_x]_{tp}$ à la sortie du pot d'échappement du véhicule apte à rendre le facteur de conformité à court terme ($FC_{st}$) déterminé au pas suivant strictement inférieur au dit seuil (FC,FC').

2. Procédé selon la revendication 1, **caractérisé en ce que** le facteur de conformité à court terme ($FC_{st}$) déterminé au pas suivant est égal à un pourcentage fixe prédéterminé (K1) du seuil (FC,FC') strictement inférieur à 1.

3. Procédé selon l'une des revendications 1 ou 2, **caractérisé en ce que** le réglage comprend l'augmentation d'une quantité de gaz d'échappement à haute et/ou à basse pression recyclée à l'admission du moteur.

4. Procédé selon l'une des revendications 1 à 3, **caractérisé en ce que** le réglage comprend l'augmentation de la température du système de post-traitement (16,17).

5. Procédé selon l'une des revendications 1 à 4, **caractérisé en ce que** le réglage comprend l'augmentation de la fréquence et/ou de la durée des purges d'un piège à oxydes d'azote (16) associé au moteur (1).

6. Procédé selon l'une des revendications 1 à 5, **caractérisé en ce que** le réglage comprend l'augmentation d'un débit d'agent réducteur injecté dans un catalyseur de réduction sélective des oxydes d'azote (17) associé au moteur (1).

7. Procédé selon l'une des revendications 1 à 6, **caractérisé en ce que** le réglage comprend la limitation de la puissance du moteur.

8. Procédé selon l'une des revendications 1 à 7, **caractérisé en ce qu'**il est mis en œuvre de manière itérative à chaque pas de sous-distance élémentaire ($\Delta d$) de la distance élémentaire ($\Delta D$).

9. Procédé selon l'une des revendications 1 à 8, **caractérisé en ce qu'**il comprend en outre, quand le facteur de conformité à long terme ($FC_{lt}$) est inférieur au seuil (FC,FC'), une étape (500) au cours de laquelle :

   i. on détermine un ensemble de paramètres représentatifs du point de fonctionnement du moteur comprenant au moins le couple (C), le régime (N) et la température d'eau ($T_{eau}$) ; et,
   ii. on règle le moteur (1) et le système de post-traitement (16,17) dans un mode de réglage nominal en fonction desdits paramètres, correspondant à une concentration en oxydes d'azote $[NO_x]_{tp,nom}$ nominale indépendante d'un objectif de facteur de conformité à court terme ($FC_{st}$).

10. Procédé selon l'une des revendications 1 à 8, **caractérisé en ce qu'**il comprend en outre, quand le facteur de conformité à long terme ($FC_{lt}$) est inférieur au seuil (FC,FC'), une étape (500) au cours de laquelle :

> i. on détermine un ensemble de paramètres représentatifs du point de fonctionnement du moteur comprenant au moins le couple (C), le régime (N) et la température d'eau ($T_{eau}$) ; et,
>
> ii. on procède à un réglage du moteur (1) et/ou du système de post-traitement (16,17) correspondant à une concentration en oxydes d'azote $[NO_x]_{tp}$ apte à rendre le facteur de conformité à court terme ($FC_{st}$) déterminé au pas suivant égal audit seuil (FC,FC').

**Patentansprüche**

1. Verfahren zur Kontrolle der Emissionen von Stickoxiden am Ausgang des Auspufftopfes (18) eines Kraftfahrzeugs, das mit einer Brennkraftmaschine (1) ausgestattet ist, die mit wenigstens einem Nachbehandlungssystem (16, 17) für die in den Verbrennungsgasen des Motors (1) ausgestoßenen Stickoxide verbunden ist, welches wenigstens einen Schritt der Bestimmung der mittleren Menge von Stickoxiden pro zurückgelegten Kilometer ($FC_{lt}$), die von dem Fahrzeug ab dem Beginn einer Fahrt bis zum Anhalten des Fahrzeugs ausgestoßen wurde, umfasst, **dadurch gekennzeichnet, dass**
   es umfasst, iterativ für jeden einer zurückgelegten festen elementaren Entfernung ($\Delta D$) entsprechenden Teilschritt ab dem Beginn der Fahrt und bis zum Anhalten des Fahrzeugs:

   - einen Schritt (200), in welchem ein Kurzzeit-Konformitätsfaktor ($FC_{st}$), der gleich der mittleren Menge von Stickoxiden pro zurückgelegten Kilometer ist, die auf der gerade zurückgelegten elementaren Entfernung ($\Delta D$) ausgestoßen wurde, und ein Langzeit-Konformitätsfaktor ($FC_{lt}$), der gleich der mittleren Menge von Stickoxiden pro zurückgelegten Kilometer auf der seit dem Beginn der Fahrt zurückgelegten Entfernung (D) ist, bestimmt werden;
   - einen Schritt (300), in welchem der Langzeit-Konformitätsfaktor ($FC_{lt}$) mit einem Schwellenwert (FC, FC') verglichen wird; und
   - einen Schritt (400), in welchem, wenn der Langzeit-Konformitätsfaktor ($FC_{lt}$) größer als der Schwellenwert (FC, FC') ist:

     i. eine Menge von für den Betriebspunkt des Motors repräsentativen Parametern bestimmt wird, die wenigstens das Drehmoment (C) des Motors, die Drehzahl (N) des Motors und die Wassertemperatur ($T_{Wasser}$) des Motors umfasst; und
     ii. eine Einstellung des Motors (1) und/oder des Nachbehandlungssystems (16, 17) vorgenommen wird, die einer Konzentration von Stickoxiden $[NO_x]_{tp}$ am Ausgang des Auspufftopfes des Fahrzeugs entspricht, die geeignet ist zu bewirken, dass der im folgenden Teilschritt bestimmte Kurzzeit-Konformitätsfaktor ($FC_{st}$) streng kleiner als der Schwellenwert (FC, FC') ist.

2. Verfahren nach Anspruch 1, **dadurch gekennzeichnet, dass** der Kurzzeit-Konformitätsfaktor ($FC_{st}$), der im folgenden Teilschritt bestimmt wird, gleich einem vorbestimmten festen prozentualen Anteil (K1) des Schwellenwertes (FC, FC') ist, der streng kleiner als 1 ist.

3. Verfahren nach einem der Ansprüche 1 oder 2, **dadurch gekennzeichnet, dass** die Einstellung die Erhöhung einer Abgasmenge mit hohem und/oder mit niedrigem Druck umfasst, die zum Einlass des Motors rückgeführt wird.

4. Verfahren nach einem der Ansprüche 1 bis 3, **dadurch gekennzeichnet, dass** die Einstellung die Erhöhung der Temperatur des Nachbehandlungssystems (16, 17) umfasst.

5. Verfahren nach einem der Ansprüche 1 bis 4, **dadurch gekennzeichnet, dass** die Einstellung die Erhöhung der Häufigkeit und/oder der Dauer der Reinigungen einer dem Motor (1) zugeordneten Stickoxidfalle (16) umfasst.

6. Verfahren nach einem der Ansprüche 1 bis 5, **dadurch gekennzeichnet, dass** die Einstellung die Erhöhung eines Durchflusses an Reduktionsmittel umfasst, das in einen dem Motor (1) zugeordneten Katalysator zur selektiven Reduktion der Stickoxide (17) eingespritzt wird.

7. Verfahren nach einem der Ansprüche 1 bis 6, **dadurch gekennzeichnet, dass** die Einstellung die Begrenzung der Leistung des Motors umfasst.

8. Verfahren nach einem der Ansprüche 1 bis 7, **dadurch gekennzeichnet, dass** es iterativ für jeden Teilschritt eines elementaren Unterabschnitts ($\Delta$d) der elementaren Entfernung ($\Delta$D) durchgeführt wird.

9. Verfahren nach einem der Ansprüche 1 bis 8, **dadurch gekennzeichnet, dass** es außerdem, wenn der Langzeit-Konformitätsfaktor ($FC_{lt}$) kleiner als der Schwellenwert (FC, FC') ist, einen Schritt (500) umfasst, in welchem:

i. eine Menge von für den Betriebspunkt des Motors repräsentativen Parametern bestimmt wird, die wenigstens das Drehmoment (C), die Drehzahl (N) und die Wassertemperatur ($T_{Wasser}$) umfasst; und
ii. der Motor (1) und das Nachbehandlungssystem (16, 17) in Abhängigkeit von diesen Parametern in einem Nenn-Einstellmodus eingestellt werden, der einer Nennkonzentration der Stickoxide $[NO_x]_{tp,nom}$ entspricht, die von einem Zielwert des Kurzzeit-Konformitätsfaktors ($FC_{st}$) unabhängig ist.

10. Verfahren nach einem der Ansprüche 1 bis 8, **dadurch gekennzeichnet, dass** es außerdem, wenn der Langzeit-Konformitätsfaktor ($FC_{lt}$) kleiner als der Schwellenwert (FC, FC') ist, einen Schritt (500) umfasst, in welchem:

i. eine Menge von für den Betriebspunkt des Motors repräsentativen Parametern bestimmt wird, die wenigstens das Drehmoment (C), die Drehzahl (N) und die Wassertemperatur ($T_{Wasser}$) umfasst; und
ii. eine Einstellung des Motors (1) und/oder des Nachbehandlungssystems (16, 17) vorgenommen wird, die einer Konzentration von Stickoxiden $[NO_x]_{tp}$ entspricht, die geeignet ist zu bewirken, dass der im folgenden Teilschritt bestimmte Kurzzeit-Konformitätsfaktor ($FC_{st}$) gleich dem Schwellenwert (FC, FC') ist.

**Claims**

1. Method for controlling emissions of nitrogen oxides at the outlet of the exhaust box (18) of a motor vehicle fitted with an internal-combustion engine (1) associated with at least one post-treatment system (16, 17) for the nitrogen oxides emitted in the combustion gases of the engine (1), including at least one stage for determining the mean quantity of nitrogen oxides per travelled kilometer ($FC_{lt}$) emitted by the vehicle from the start of a journey to the time the vehicle is stopped,
**CHARACTERIZED IN THAT**
it includes, iteratively at each step of the fixed elementary distance ($\Delta$D) travelled, from the beginning of the journey and until the vehicle is stopped:

- a stage (200) in which a short-term conformity factor ($FC_{st}$) that is equal to the mean quantity of nitrogen oxides per travelled kilometer emitted over said elementary distance ($\Delta$D) that has just been travelled, and a long-term conformity factor ($FC_{lt}$) equal to the mean quantity of nitrogen oxides per travelled kilometer over the distance (D) travelled from the start of the journey are determined,
- a stage (300) in which said long-term conformity factor ($FC_{lt}$) is compared to a threshold (FC, FC'), and
- a stage (400) in which, when said long-term conformity factor ($FC_{lt}$) is greater than said threshold (FC, FC'):

i. a set of parameters representative of the operating point of the engine is determined, including at least the torque (C) of the engine, the speed (N) of the engine and the water temperature ($T_{eau}$) of the engine, and
ii. the engine (1) and/or the post-treatment system (16, 17) are set, corresponding to a concentration of nitrogen oxides $[NO_x]_{tp}$ at the outlet of the exhaust box of the vehicle that ensures that the short-term conformity factor ($FC_{st}$) determined in the following step is strictly below said threshold (FC, FC').

2. Method according to Claim 1, **characterized in that** the short-term conformity factor ($FC_{st}$) determined in the following step is equal to a fixed predetermined percentage ($K_1$) of the threshold (FC, FC') that is strictly less than 1.

3. Method according to one of Claims 1 or 2, **characterized in that** the setting includes increasing a quantity of high- and/or low-pressure exhaust gas recycled at the intake of the engine.

4. Method according to one of Claims 1 to 3, **characterized in that** the setting includes increasing the temperature of the post-treatment system (16, 17).

5. Method according to one of Claims 1 to 4, **characterized in that** the setting includes increasing the frequency and/or duration of the purges of an $NO_x$ trap (16) associated with the engine (1).

6. Method according to one of Claims 1 to 5, **characterized in that** the setting includes increasing a flow rate of reducing agent injected into a selective reduction catalyst for nitrogen oxides (17) associated with the engine (1).

7. Method according to one of Claims 1 to 6, **characterized in that** the setting includes limiting the power of the engine.

8. Method according to one of Claims 1 to 7, **characterized in that** it is implemented iteratively at each elementary sub-distance step ($\Delta d$) of the elementary distance ($\Delta D$).

9. Method according to one of Claims 1 to 8, **characterized in that** it also includes, when the long-term conformity factor ($FC_{lt}$) is below the threshold (FC, FC'), a stage (500) in which:

> i. a set of parameters representative of the operating point of the engine is determined, including at least the torque (C), the engine speed (N) and the water temperature ($T_{eau}$), and
> ii. the engine (1) and the post-treatment system (16, 17) are set to a nominal setting mode as a function of said parameters, corresponding to a nominal concentration of nitrogen oxides $[NO_x]_{tp,nom}$ independent of a target short-term conformity factor ($FC_{st}$).

10. Method according to one of Claims 1 to 8, **characterized in that** it also includes, when the long-term conformity factor ($FC_{lt}$) is below the threshold (FC, FC'), a stage (500) in which:

> i. a set of parameters representative of the operating point of the engine is determined, including at least the torque (C), the engine speed (N) and the water temperature ($T_{ean}$), and
> ii. the engine (1) and/or the post-treatment system (16, 17) are set, corresponding to a concentration of nitrogen oxides $[NO_x]_{tp}$ that ensures that the short-term conformity factor ($FC_{st}$) determined in the following step is equal to said threshold (FC, FC').

**Fig. 1**

**Fig. 2**

initialisation
$FC_{st} = 0$
$FC_{lt} = 0$
$C_o N_o T_{eau,o} D = 0$
$[NO_x]_{tp,o} = [NO_x]_{tp,o,nom}$

100

$FC_{st} = \int_{\Delta t} Q_{ech} \cdot [NO_x]_{tp} \cdot dt \, / \Delta D$
$FC_{lt} = \int_{t} Q_{ech} \cdot [NO_x]_{tp} \cdot dt \, / \, D$

200

300

$FC_{lt} < FC$
?

oui

non

400

$C, N, T_{eau}$
$[NO_x]_{tp}$ tel que
$FC_{st} = K_1 \cdot FC$
$(K_1 < 1)$

$C, N, T_{eau}$
$[NO_x]_{tp} = [NO_x]_{tp,nom}$

500

# Fig. 3

**EP 3 574 194 B1**

## RÉFÉRENCES CITÉES DANS LA DESCRIPTION

**Documents brevets cités dans la description**

- DE 4319282 C1